Europäisches Patentamt

European Patent Office

Office européen des brevets

(19)

(11) Numéro de publication: **0 251 946**
**B1**

(12) **FASCICULE DE BREVET EUROPEEN**

(45) Date de publication du fascicule du brevet:
22.08.90

(51) Int. Cl.⁵: **G01N 21/07**, G01N 33/48

(21) Numéro de dépôt: 87420174.2

(22) Date de dépôt: 23.06.87

(54) **Dispositif d'analyse d'un échantillon liquide.**

(30) Priorité: 26.06.86 FR 8609488

(43) Date de publication de la demande:
07.01.88 Bulletin 88/1

(45) Mention de la délivrance du brevet:
22.08.90 Bulletin 90/34

(84) Etats contractants désignés:
AT BE CH DE ES FR GB GR IT LI LU NL SE

(56) Documents cités:
EP-A- 0 160 282
EP-A- 0 180 528

(73) Titulaire: KIS PHOTO INDUSTRIE (société anonyme),
21 avenue du Général de Gaulle, F-38100 Grenoble(FR)

(72) Inventeur: Simon, Jean-Pierre, 10, Allée de Verderet,
F-38100 Grenoble(FR)

(74) Mandataire: Laurent, Michel et al, Cabinet LAURENT et
GUERRE B.P. 32, F-69131 Ecully Cédex(FR)

ACTORUM AG

## Description

La présente invention se rapporte à l'analyse d'un échantillon liquide. Elle sera décrite et explicitée ci-après par référence à l'analyse biomédicale mono-paramètre d'un échantillon de sang total, mais il doit être entendu que la présente invention ne saurait être limitée dans sa portée à ce secteur d'activité.

Conformément à la demande de brevet EP-A-0180528, on a décrit un dispositif d'analyse d'un échantillon liquide, comprenant un boîtier compartimenté, ayant la forme d'un disque, présentant :
- un logement pour au moins une dose d'un réactif et/ou d'un diluant ;
- une chambre de calibrage d'une quantité calibrée obtenue à partir de l'échantillon ;
- une chambre de mélange d'au moins la quantité calibrée et de la dose de réactif ;
- éventuellement une cellule de mesure optique, en communication avec la chambre de mélange.

Et le boîtier est destiné à coopérer avec un appareil de centrifugation, aux fins de faire circuler les liquides au sein dudit boîtier sous l'effet de la force de la centrifuge.

Selon cette demande de brevet, en plus du dispositif d'analyse proprement dit, on prévoit, de manière solidaire avec le boîtier, un dispositif d'introduction avec bouchon, affecté à la réception d'une quote-part (par exemple quelques gouttes) de l'échantillon à analyser.

Si on utilise la solution conforme à la demande de brevet EP-A-0180528, pour analyser un échantillon de plasma par exemple, ceci implique une manipulation de ce dernier en plus de la centrifugation nécessaire et préalable de l'échantillon du sang total. Il peut en résulter, d'une part une perte de tout ou partie de l'échantillon à analyser, et d'autre part une pollution du même échantillon, faussant ou empêchant l'analyse ultérieure.

Par ailleurs, avec le dispositif d'introduction précédent, on n'est jamais certain d'avoir introduit la quantité suffisante pour l'analyse. Ou alors, il faut travailler avec une quantité d'échantillon largement excédentaire, et on risque alors de saturer le dispositif d'analyse, sans possibilité ultérieure d'une mesure fiable.

La présente invention a pour objet un dispositif d'analyse permettant un prélèvement direct d'une quantité déterminée et fiable du liquide à analyser.

Selon l'invention, le dispositif comprend une cartouche indépendante, irréversiblement fixable sur le boîtier, laquelle comprend une entrée pour introduire l'échantillon à analyser, et réceptacle pour recueillir l'échantillon introduit, un moyen de dosage de l'échantillon recueilli , en relation avec le réceptacle par un conduit capillaire, une sortie pour une quantité dosée vers une entrée du boîtier communiquant avec la chambre de calibrage de ce dernier.

Grâce à l'invention, on peut prélever directement l'échantillon à analyser avec la cartouche, en se limitant toujours à la même quantité de départ, grâce au réceptacle obturé du côté opposé à l'entrée par le conduit capillaire. Puis, la cartouche étant clipsée définitivement sur le boîtier, on peut doser l'échantillon au sein de la cartouche, pour introduire une quantité précise et fiable au sein du boîtier d'analyse proprement dit.

Par liquide, au sens de la présente invention, on entend tout fluide susceptible de s'écouler, qu'il s'agisse d'un liquide, d'une suspension, ou de toute autre matière ayant une viscosité compatible avec un écoulement au sein du dispositif d'analyse.

La manière dont l'invention peut être réalisée et les avantages qui en découlent, ressortiront mieux de l'exemple de réalisation qui suit, donné à titre indicatif et non limitatif à l'appui des figures annexées.

La figure 1 est une coupe selon un plan horizontal d'un dispositif d'analyse selon l'invention.

La figure 1a représente une vue à échelle agrandie du boîtier représenté à la figure 1, au niveau de la chambre de calibrage.

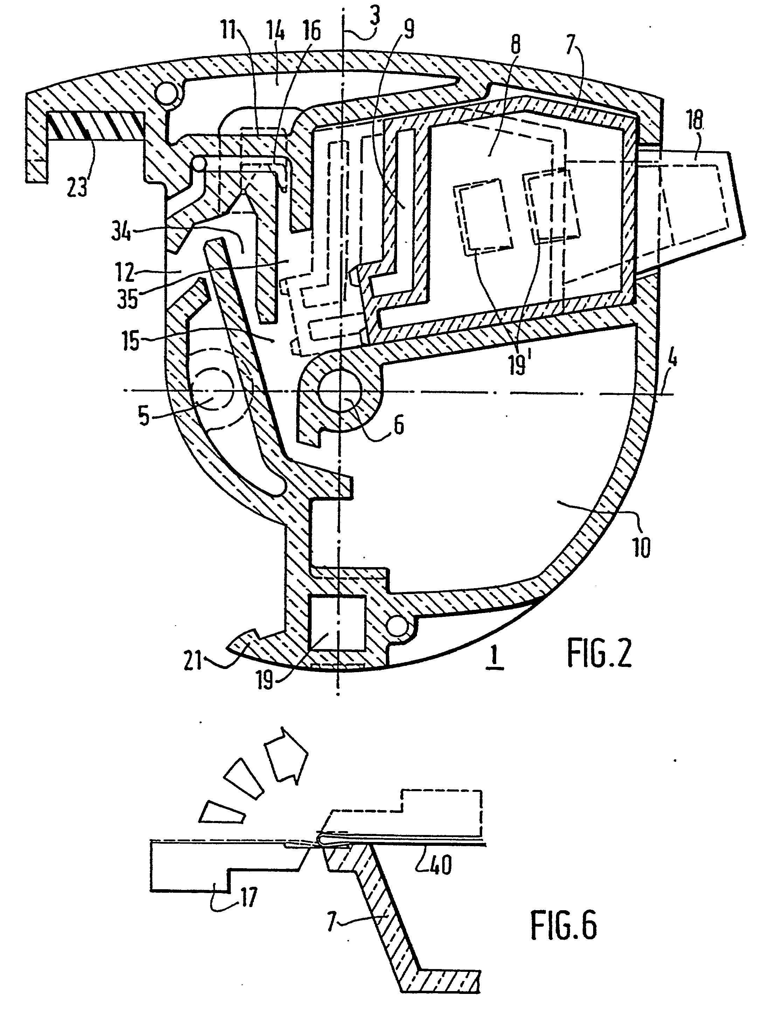

La figure 2 est une coupe selon le même plan du boîtier appartenant au dispositif selon la figure 1, montrant les deux positions du logement du réactif et du diluant , l'une en traits pleins et l'autre en traits pointillés.

La figure 3 est une coupe selon le même plan de la cartouche appartenant à un dispositif selon la figure 1.

La figure 4 est une coupe d'une autre forme de réalisation de la cartouche, selon l'invention.

Les figures 5 à 10 sont des représentations schématiques du dispositif de fermeture de l'ensemble-réservoirs, et de son mode de fonctionnement en accord avec l'invention.

Les figures 11 à 16 représentent schématiquement le fonctionnement d'un dispositif selon l'invention.

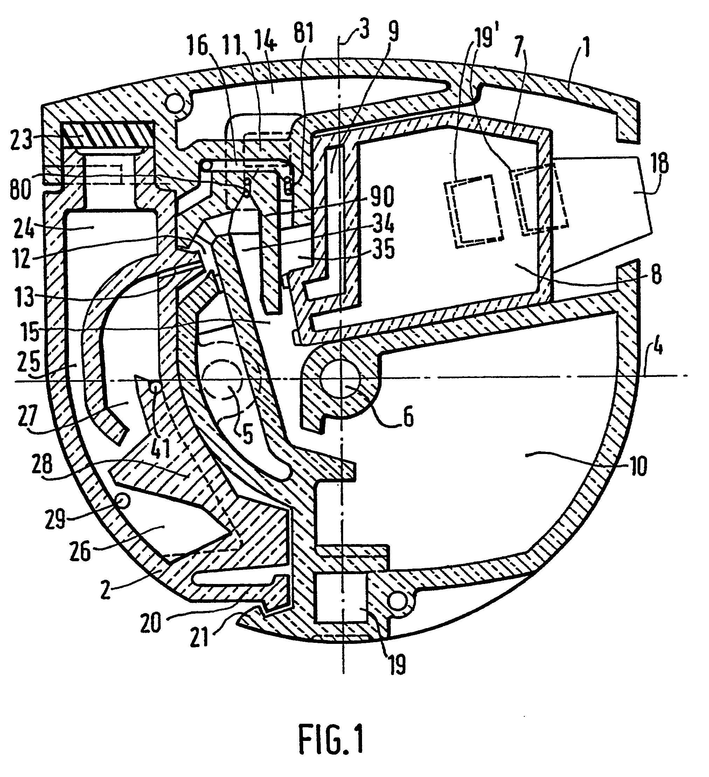

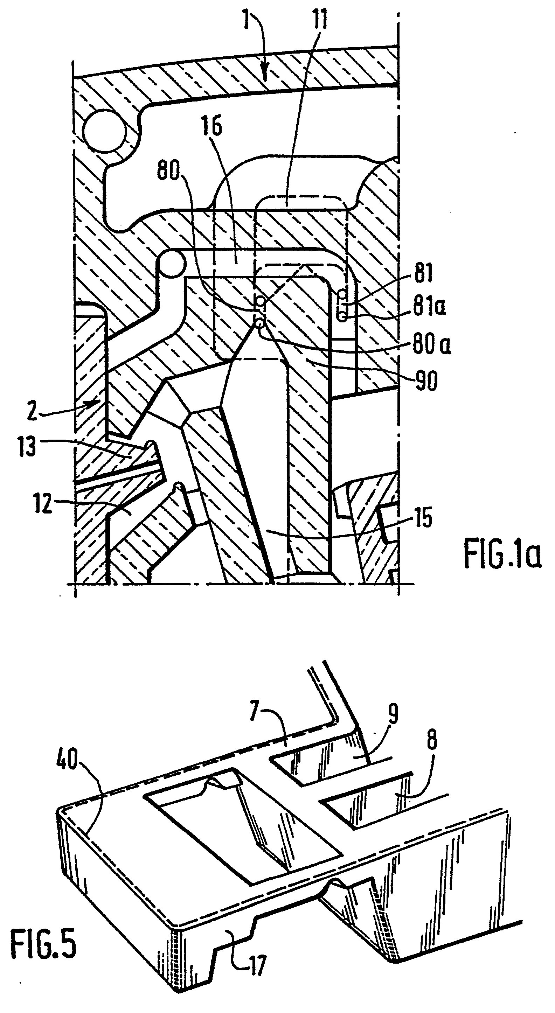

Comme on peut le voir dans la figure 1, le dispositif conforme à l'invention comprend deux parties distinctes, un boîtier (1) et une cartouche indépendante (2), cette dernière étant destinée lors de l'utilisation à être clipsée (fixée) de façon irréversible sur le boîtier. Le dispositif d'analyse ainsi constitué, est plat, et présente un aspect général en forme d'écusson lors de son utilisation, il est disposé selon un plan principal substantiellement horizontal, sur le plateau d'une centrifugeuse. L'irréversibilité du clipsage de la cartouche sur le dit boîtier limite l'emploi du dispositif à une seule utilisation.

Le boîtier (1) présente, suivant l'un des deux axes médians (3,4), deux orifices (5,6), destinés à coopérer avec des ergots de positionnement situés sur le plateau de la centrifugeuse,disposés respectivement l'un (6) au point d'intersection des deux axes médians (3,4), l'autre (5) décalé suivant l'axe (4). L'axe (3) correspond à l'axe de la centrifugation, comme explicité ci-après, dans un sens ou dans l'autre, c'est-à-dire vers le bas ou vers le haut selon la figure 1. La coopération des ergots de positionnement avec les orifices (5,6) permet d'alterner le sens de la centrifugation, comme explicité dans la demande de brevet français déposée au nom de la présente Demanderesse, le 25/09/86 sous le n° 86 13 550.

Le boîtier (1) est compartimenté en une pluralité de chambres, dont la plupart sont reliées entre elles au moyen d'orifices ou conduits capillaires. Par orifice ou conduit capillaire, au sens de la présente invention, on entend tout moyen permettant d'une part, en l'absence de toute force centrifuge, d'arrêter un liquide, à l'encontre de tout écoulement naturel, par exemple par gravité, et d'autre part en présence d'une force centrifuge, de se comporter comme un conduit ou orifice d'écoulement du même liquide.

Les cloisons définissant les différentes chambres sont directement issues du moulage. Elles sont réalisées, ainsi que le fond et le couvercle, en polyméthacrylate de méthyle, matériau, qui de façon connue, est particulièrement transparent aux rayons ultra-violets, ce qui permet différentes analyses optiques impliquant l'utilisation de longueurs d'onde voisines de 340 nm, c'est à dire dans le domaine de l'ultra-violet.

De façon classique, le fond et le couvercle du boîtier (1) sont fixés sur les cloisons par soudage aux ultra-sons.

Les différents compartiments définissent respectivement :

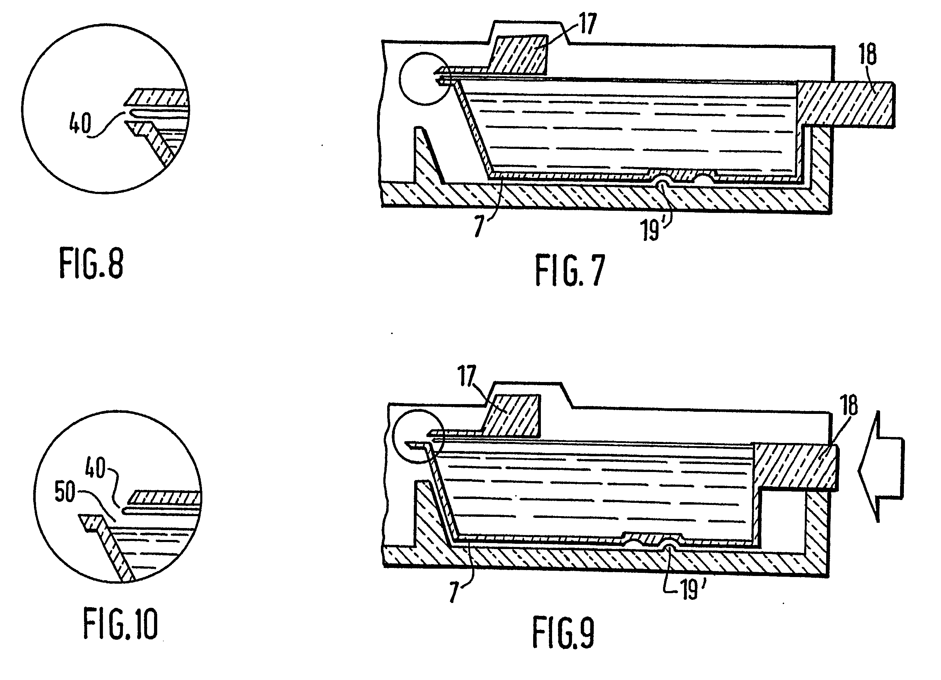

- dans le quart supérieur droit,défini par les deux axes médians (3,4), une case pour l'ensemble-reservoirs (7) formé par la solidarisation du logement du diluant (8) du réactif et le logement du réactif (9) (Cf Figure 5) ;

- dans le quart inférieur droit,défini par les deux axes médians (3,4), une chambre de mélange (10), d'une part des doses de réactif et diluant contenues respectivement dans les logements (8) et (9), et d'autre part de l'ensemble diluant-réactif avec une quantité calibrée du liquide à analyser ;

- dans le quart supérieur gauche , défini par les deux axes médians (3,4),une chambre de calibrage (11) du liquide à analyser, communiquant :

. tout d'abord avec une entrée (12) en forme de pavillon tronconique, ménagée sur l'un des bords du boîtier (1), communiquant avec la sortie capillaire (13) de la cartouche de séparation (2) , lorsque celle-ci est clipsée définitivement sur le boîtier ;

. ensuite,par un conduit (16),avec une chambre de trop-plein (14) du liquide à analyser, située dans la partie inférieure du boîtier (1) ;

. enfin, avec la chambre de mélange (10), par l'intermédiaire d'un conduit de transfert capillaire (15) .

La chambre de calibrage (11) a la forme d'un siphon doseur, dont l'axe principal est parallèle à l'axe (3). Elle est disposée au-dessous du plan de circulation des liquides (diluant, réactif, quantité dosée en provenance de la cartouche (2)), dans la première partie du boîtier, vers la chambre de mélange (10), en gros la moitié gauche selon la figure 1 ; ce qui veut dire que dans cette première partie, le boîtier comporte deux niveaux séparés par une cloison plane et médiane, non représentée.

La chambre de calibrage (11) communique avec l'entrée (12) par un conduit capillaire d'introduction (80), et par un conduit capillaire d'évacuation (81) avec le passage de transfert (15). Le conduit d'évacuation (81) communique aussi par le conduit (16) avec une chambre de trop-plein, située au niveau inférieur du boîtier. Les conduits (80) et (81) sont séparés, en termes de circulation des liquides,par une cloison (90).

L'orifice d'entrée (80a) du conduit capillaire d'introduction et l'orifice de sortie (81a) du conduit capillaire de sortie (cf.fig. 1a), sont situés au niveau de la cloison médiane précitée, c'est-à-dire au-dessus de la chambre de calibrage (11). Les conduits d'introduction (80) et d'évacuation (81) sont inclinés, par rapport au plan principal du boîtier (1), vers la chambre de calibrage (11), située en contrebas.

Avec la chambre de calibrage selon l'invention, l'action de la force centrifuge selon l'axe (3) vers le haut, en liaison avec la disposition de ladite chambre, permet d'araser l'excès de liquide, au niveau de l'orifice (81a), et d'obtenir un calibrage précis et exact.

Les logements du diluant (8) et du réactif (9) sont placés dans un compartiment indépendant (7) agencé à la manière d'un tiroir. En effet,afin de faciliter les opérations de remplissage d'une part, et de permettre un stockage du réactif pour des durées conséquentes d'autre part, l'ensemble-réservoirs (7) est réalisé indépendemment du boîtier (1), par moulage en polyoléfine. Puis il est rempli par un ou plusieurs réactifs, et leurs diluants respectifs. Enfin, il est obturé par un opercule (40) réalisé par un film complexe aluminoplastique, afin d'assurer une isolation totale du ou des réactifs vis à vis de l'atmosphère extérieure. Comme on peut mieux le voir dans les figures 6 à 10, l'ensemble-reservoirs (7) présente du coté de l'une de ses extrémités une patte (17), dite patte de rétention .

Lors de l'obturation,l'opercule (40) est également appliqué sur cette patte (17) . Sur la figure 6, on a représenté en traits discontinus le profil dudit opercule, une fois replié sur l'ensemble (7). Comme on peut le voir dans la figure 5, on met en place l'ensemble-réservoirs (7) dans le boîtier (1) (dont le couvercle supérieur n'a encore été soudé), on replie la patte de rétention (17) vers le haut,ce qui a pour effet de briser les deux bras de liaison en matière plastique.

On soude alors par ultra-sons le couvercle sur le boîtier (1), la patte de rétention venant se loger dans une anfractuosité ménagée dans le dit couvercle à cet effet. De plus, l'ensemble-réservoirs (7) présente un bouton-poussoir (18) qui émerge du boîtier (1) du coté opposé à la patte de rétention (17). Enfin, l'ensemble-réservoirs(7) présente à sa partie inférieure un système de clipsage (19) destiné à coopérer avec le fond du boîtier (1). Lorsqu'on actionne le bouton-poussoir (18),on déplace irréversiblement l'ensemble-réservoirs (7) de la position de conservation du réactif et du diluant , représentée à la figure 8, dans laquelle l'ensemble (7) est obturé de manière étanche, à une position définitive d'activation. Le déplacement du dit ensemble (7) provoque, comme on peut mieux le voir dans les figures 7 à 10 ,et du fait de l'immobilité de la patte de rétention (17), un décollement de l'opercule (40), sur une longueur moitié de celle du déplacement de l'ensemble-réservoirs (7). Comme les deux logements (8,9) sont contigus au niveau de cette extrémité, les liquides qu'ils contiennent peuvent être libérés par l'orifice capillaire (50) ainsi créé, lors des phases de centrifugation, en direction de la chambre de mélange (10). Les figures 7 et 10 représentent schématiquement des vues aggrandies de cet orifice (50), avant et après clipsage irréversible de l'ensemble réservoirs (7) sur le boîtier (1).

Toutefois, il est à noter, et c'est une caractéristique importante de l'invention, que sans l'action d'une force centrifuge,les liquides ne peuvent s'évacuer librement de l'ensemble (7), du fait que l'ouverture (50) occasionnée par le décollement est d'une part située sur la partie supérieure de l'ensemble-réservoirs (7),et d'autre part de nature capillaire.

La cellule de mesure (19) communique librement avec la chambre de mélange (10). De façon classique, elle présente deux parois à faces parallèles, ayant une bonne qualité optique, afin de permettre les mesures spectrophotométriques.

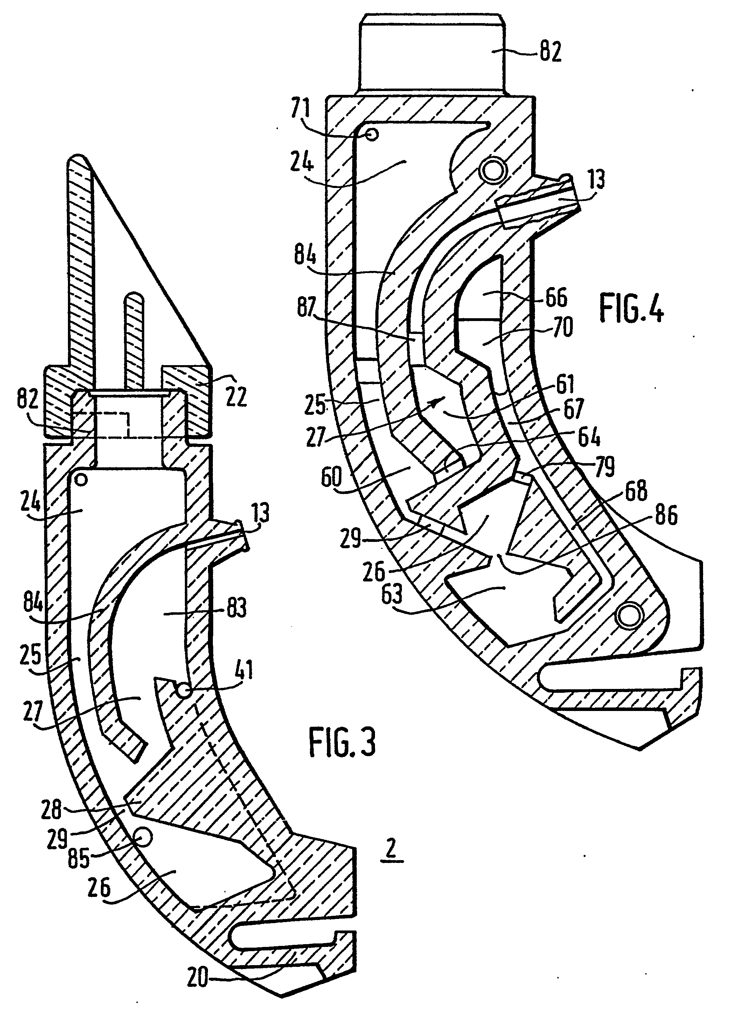

La cartouche de séparation (2) présente (voir figure 3) un aspect général en forme d'arc de cercle. Elle est destinée à venir s'emboiter et se clipser, de manière irréversible sur le boîtier (1), au moyen d'organes de clipsage (20,21) qui coopèrent.

Avant d'être solidarisée au boîtier (1), la dite cartouche (2) est destinée à recueillir l'échantillon à analyser, en l'occurence du sang total. Pour ce faire, elle présente à son entrée (82),un embout de prélèvement (22) amovible. Une fois le prélèvement réalisé, on retire l'embout (22), qui est simplement emboité, et l'on clipse la cartouche de séparation (2) sur le boîtier (1),en insérant tout d'abord l'entrée (82) qui portait l'embout de prélèvement (22), dans un endroit prévu à cet effet dans le boîtier (1). Un bouchon (23) en silicone est ménagé en ce lieu, afin d'obturer parfaitement la dite cartouche (2), lorsque celle-ci est en place sur le boîtier (1). Puis on clipse la cartouche sur le boîtier par une simple pression.

La cartouche de séparation (2), outre l'entrée (2), comprend au moins deux chambres distinctes (27) et (26), communiquant entre elles par un passage rétréci ou capillaire (29), dont une (26) pour recueillir par centrifugation la fraction lourde (globules rouges) de l'échantillon de sang total, et dont l'autre (27) pour recueillir la fraction légère (plasma). Une cloison (84) délimite dans la première chambre (27), d'un côté un conduit capillaire (25), en correspondance avec le passage rétréci (29), et un réceptacle (24) pour l'échantillon de sang total introduit par l'entrée (82), et de l'autre côté une chambre (83) d'évacuation de la fraction légère dosée vers la sortie capillaire (13) de la cartouche, et donc vers la chambre de calibrage (11) du boîtier (1). La sortie (13) de la cartouche est disposée au voisinage de son entrée (82), mais séparée de cette dernière par la cloison (84). Par ailleurs, la première chambre (27) communique par un orifice capillaire (41) avec une cuve de trop-plein, non représentée, située au-dessous du plan de circulation des liquides représenté à la figure 3.

D'après la description précédente, et dans le sens de la force centrifuge vers le bas selon la figure 3, et selon l'axe 3, la coopération des chambres (26) et (27), avec le conduit (41) vers la cuve de trop-plein permet à la fois de doser l'échantillon recueilli dans le réceptacle (24) et de séparer par centrifugation le même échantillon en deux fractions, l'une lourde et l'autre légère.

La chambre de recueil des globules rouges (26) est, dans le sens de la force centrifuge selon l'axe 3 vers le haut selon la figure 3, grossièrement obturée au moyen d'un clapet (85).Ce dernier a pour but, lorsque la force centrifuge est dirigée vers le bouchon (23), de limiter le débit des globules rouges en direction du capillaire (25),de telle sorte qu'ils puissent être suffisamment chassés vers le réceptacle (24), et qu'en aucune façon, ils ne puissent passer dans la chambre (27) contenant le sérum.

Par différence avec le mode d'exécution représenté à la figure 3, celui représenté à la figure 4 permet d'améliorer la séparation des fractions lourde et dégère du sang total,et en particulier de ne pas les remélanger, lorsque la fraction légère dosée est évacuée, sous l'effet de la force centrifuge, vers la sortie (13) de la cartouche.

Selon la figure 4, et par différence à la figure 3:
- la première chambre (27) de recueil de la fraction légère est divisée en deux sous-chambres (60) et (61), séparées au niveau de la cloison (84) par un capillaire (64) ;
- la sous-chambre (61) communique avec la sortie (13) par un capillaire (87) ;
- en plus de la première chambre (26) de recueil de la fraction lourde, on prévoit une deuxième chambre successive (63), communiquant avec la première par un capillaire (86) ;
- chacune des chambres (26) et (63) communique, respectivement par des conduits ou orifices capillaires (79) et (68), avec une pré-cuve de trop-plein (66), laquelle communique à son tour, vers la partie inférieure de la cartouche, avec une cuve de trop-plein non représentée ;
- un évent (71) communique directement avec la cuve de trop-plein non représentée.

Par conséquent, selon la figure 4, la cartouche (2) comprend deux niveaux, l'un supérieur représenté à cette même figure, sur lequel s'effectue la circulation des liquides sous l'effet de la force centrifuge, et l'autre inférieur affecté au moins en partie à la cuve de trop-plein.

Afin de faciliter la séparation et éviter le remélange, les sections des différents capillaires sont ajustées les unes vis-à-vis des autres, de la manière suivante :
- le capillaire (86) a des dimensions plus importantes que celles du capillaire (29) ;
- la section du capillaire (25) est supérieure à celle du capillaire (64), ce qui favorise le passage des composants lourds, éventuellement présents dans la sous-chambre (60), vers le réceptacle (24), plutôt que vers la sous-chambre (61), en cas d'action de la force centrifuge vers le haut selon la figure 4 ;
- la section des capillaires (67) et (79) est supérieure à celle du capillaire (29), ce qui favorise le passage des composants lourds vers la cuve de trop-plein, plutôt que vers la sous-chambre (60), en cas d'action de la force centrifuge dans les mêmes conditions que précédemment.

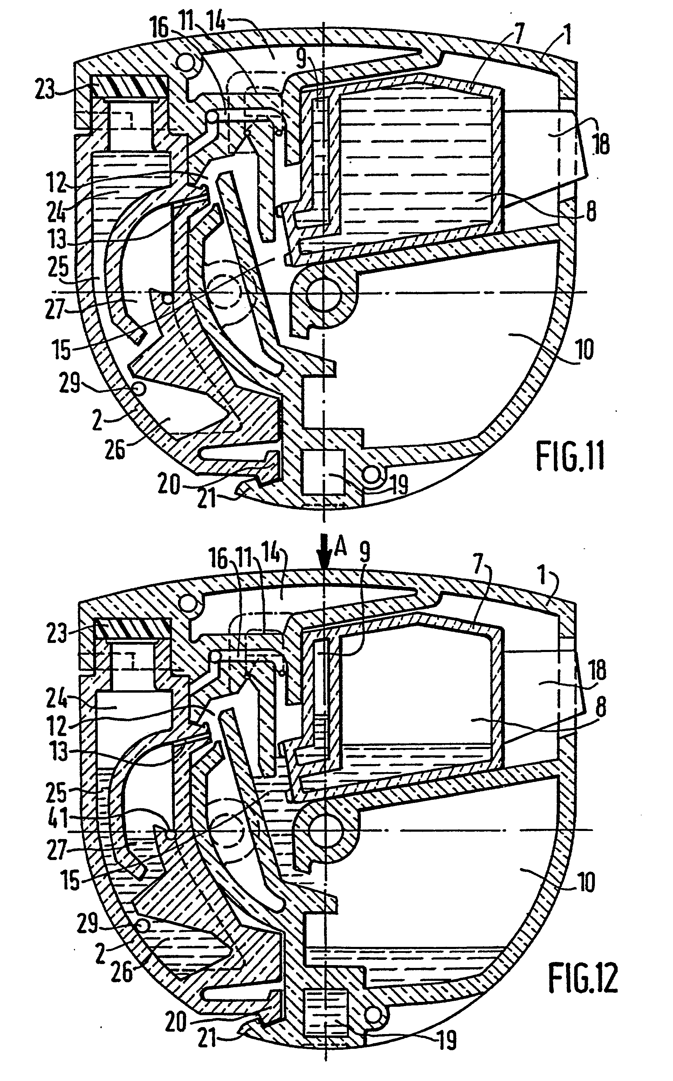

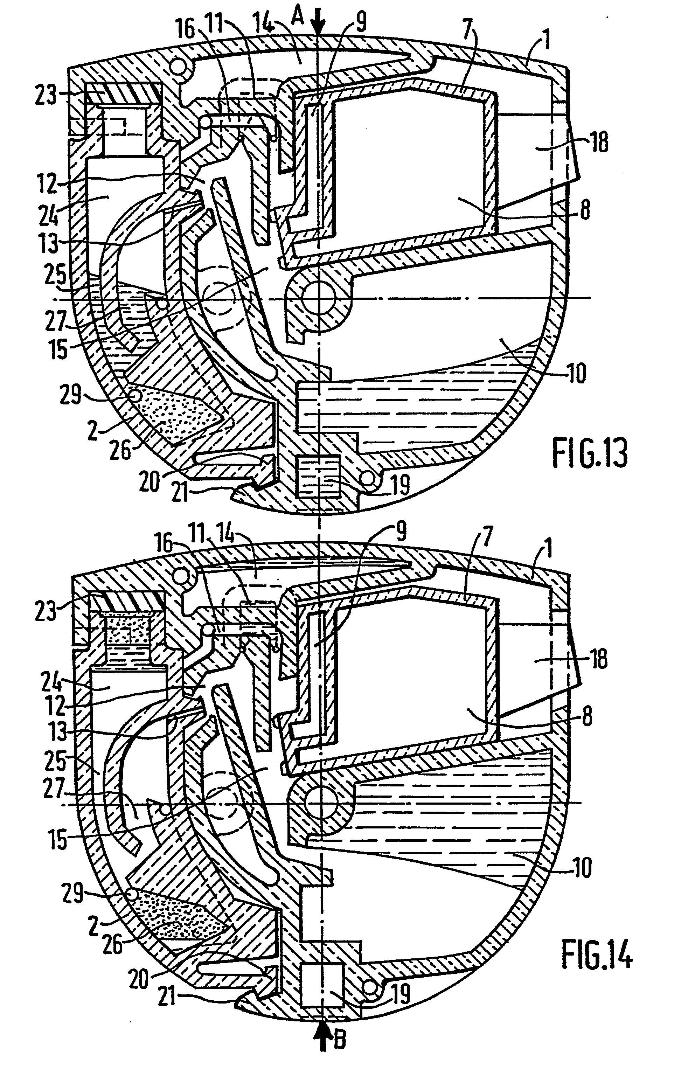

Les figures 11 à 16 illustrent le fonctionnement du dispositif selon l'invention. Après avoir réalisé une légère incision, par exemple au bout d'un doigt, ou au lobe d'une oreille, on recueille avec la cartouche de séparation (2) munie de son embout de prélèvement (22) quelques gouttes de sang . On ôte le dit embout (22), et l'on clipse la dite cartouche (2) sur le boîtier (1), comme déjà décrit précédemment (Figures 1 et 11).

Simultanément , on actionne le bouton poussoir (18) (Figure 8) de l'ensemble-réservoirs (7), provoquant d'une part le clipsage irréversible (19) du dit ensemble en position opérationnelle ou activée, et d'autre part l'ouverture capillaire de l'opercule (40).

On place alors le dispositif sur le plateau d'une centrifugeuse au moyen des deux orifices (5,6) , et l'on effectue une première centrifugation, sous l'action d'une force centrifuge dirigée suivant la flèche A, c'est-à-dire suivant l'axe médian (3), vers le bas selon la figure 12. Cette force A provoque deux effets :

- d'une part , le passage du diluant et du réactif liquide de leur logement respectif (8,9) dans la chambre de mélange (10), par l'intermédiaire du capillaire de transfert (15) ;
- d'autre part, le passage du sang, dans la cartouche (2),du réceptacle (24) dans les deux chambres (26,27), l'excès de sang ou de plasma étant évacué dans la chambre de trop-plein sous-jacente,par l'intermédiaire de l'orifice (41).

Cette première centrifugation (cf. Fig.3) se poursuit pendant environ trois minutes, afin de permettre d'une part une homogénéisation totale (10) entre le diluant (8) et le réactif liquide (9) , et d'autre part et surtout,afin de permettre la décantation du sang en plasma et globules rouges. Le plasma étant de densité inférieure aux globules rouges, surnage.

A ce moment, le sérum a envahi la première chambre (27)). Les globules rouges sont présents dans la deuxième chambre (26).On ralentit alors la centrifugation et l'on effectue en (19) une mesure spectrophotométrique du réactif, dite "mesure du blanc réactif". On contrôle ainsi la densité optique du réactif, ce qui permet de vérifier son bon état de conservation.

Après arrêt , on inverse alors la position du dispositif sur le plateau de la centrifugeuse, inversant ainsi le sens de la force centrifuge,dirigée alors suivant la flèche B (Figure 14). Le mélange réactif est alors toujours dans la chambre de mélange (10), et ce nouveau brassage améliore encore son homogénéïsation avec le diluant.Le sérum est chassé, par l'intermédiaire du capillaire de sortie (13),dans le boîtier (1) et plus exactement vers la chambre de calibrage (11). L'excès de sérum est chassé, par la force centrifuge, par l'intermédiaire du capillaire (16),dans la chambre de trop-plein du sérum (14) . De plus, l'excès de sérum présent dans le capillaire (25), ainsi que les légères fuites de globules rouges issues de la deuxième chambre (26) sont retenus dans le réceptacle (24), obturé par le bouchon (23) .

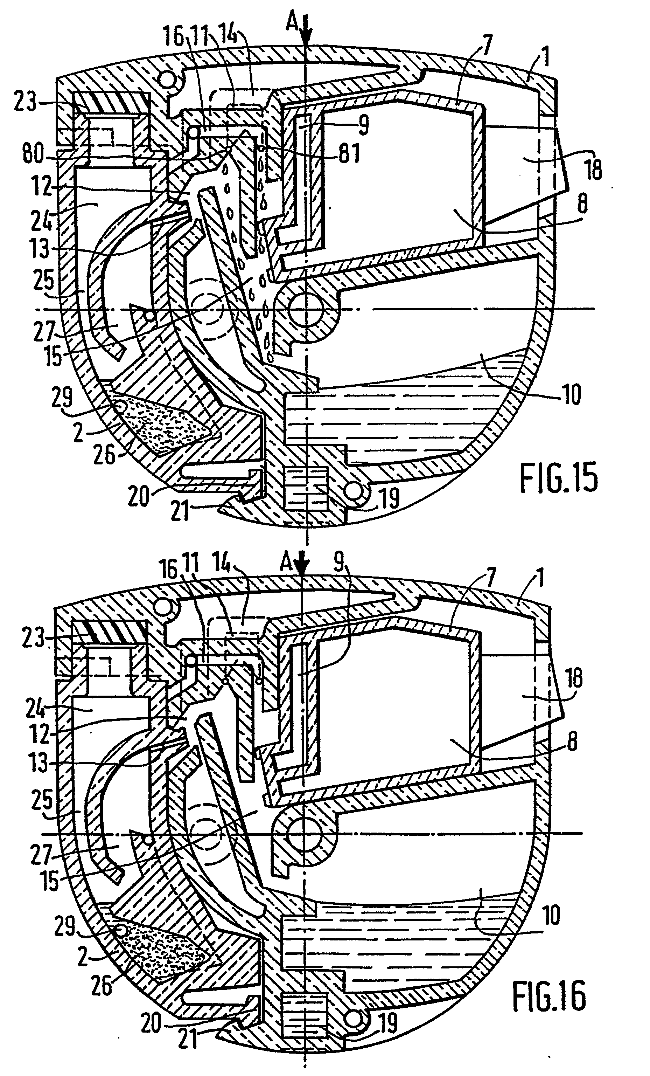

On inverse de nouveau le dispositif sur le plateau de la centrifugeuse, en inversant de nouveau la force centrifuge (flèche A) (Figure 15) . Le sérum est évacué de la chambre de calibrage (11) par les deux capillaires parallèles (34,35), qui rejoignent le capillaire de transfert (15), et est acheminé dans la chambre de mélange (10). L'homogénéïsation avec le réactif est assurée par une opération d'arrêt brutal, suivie d'un rédemarage immédiat de la centrifugeuse. L'excès de plasma et de globules rouges présent dans le réceptacle (24) au cours de l'étape précédente, est accumulé au niveau de la chambre (27) et du capillaire (25) (Figure 16).

. Du fait que la cellule de mesure (19) communique librement avec la chambre de mélange (10), elle contient le même produit que cette dernière. Aussi, les premières mesures spectrophotométriques sont-elles effectuées dès les premières secondes après le mélange, et ce, afin d'obtenir une valeur de pente correcte de la courbe de densité optique en fonction du temps.Puis des mesures de densité optique à saturation sont effectuées , pour obtenir la courbe finale. La mesure de la pente est souvent nécessaire pour pouvoir établir des conclusions correctes quant aux analyses effectuées.

Le fonctionnement précédent résulte de l'agencement suivant du dispositif selon l'invention, en termes de circulation des liquides selon la direction de la centrifugation (axe principal (3)), dans le sens (A) ou dans le sens inverse (B) :
- dans le sens (A), les chambres (27), (26), et éventuellement (63) de la cartouche (2) sont situées en aval les unes des autres ;
- dans le sens (B), l'entrée (12) du boîtier (1) est en amont du conduit capillaire d'introduction (80) vers la chambre de calibrage (11) ;
- dans le sens (A), d'une part les conduits d'introduction (80) et d'évacuation (81) de la chambre de calibrage (11), et d'autre part le logement (7) pour le réactif et/ou le diluant sont situés en amont de la chambre de mélange (10).

Il est à noter que l'invention ne se limite pas à l'emploi de réactifs liquides . En effet, on peut tout aussi bien utiliser des réactifs solides, que l'on place alors avant soudure du couvercle du boîtier (1), dans la chambre de mélange (10). Lors de la première centrifugation, le diluant rentre en contact avec le réactif solide dans la dite chambre de mélange (10),ce qui permet au réactif de se dissoudre pendant la décantation du sang . On a une dissolution en temps masqué, ce qu'il n'était pas possible de réaliser avec les dispositifs connus jusqu'alors.

## Revendications

1/ Dispositif d'analyse d'un échantillon d'un liquide, comprenant un boîtier (1) compartimenté présentant :
- un logement (9) pour au moins une dose d'un réactif et/ou d'un diluant ;
- une chambre de calibrage (11) d'une quantité calibrée obtenue à partir de l'échantillon ;
- une chambre de mélange (10) d'au moins la quantité calibrée et de la dose de réactif ;
- éventuellement une cellule de mesure optique (19), en communication avec la chambre de mélange (10), ledit boîtier étant destiné à coopérer avec un appareil de centrifugation, aux fins de faire circuler les liquides au sein dudit boîtier sous l'effet de la force centrifuge, caractérisé en ce que le dispositif comprend une cartouche (2) indépendante, irréversiblement fixable (20,21) sur le boîtier, laquelle comprend une entrée (82) pour introduire l'échantillon à analyser, un réceptacle (24) pour recueillir l'échantillon introduit, un moyen de dosage de l'échantillon recueilli, en relation avec le réceptacle par un conduit capillaire (25), une sortie (13) pour une quantité dosée vers une entrée (12) du boîtier, communiquant avec la chambre de calibrage (11).

2/ Dispositif selon la revendication 1, caractérisé en ce que la sortie (13) de la cartouche est disposée au voisinage de son entrée (82), mais séparée (84) de cette dernière.

3/ Dispositif selon la revendication 1, caractérisé en ce que le moyen de dosage incorpore des moyens de séparation par centrifugation de l'échantillon à analyser, en au moins deux fractions, l'une légère et l'autre lourde, lesquels permettent d'évacuer ladite fraction légère vers la sortie (13) de la cartouche, et une cuve de trop-plein, également en relation (41) avec le moyen de dosage.

4/ Dispositif selon la revendication 3, caractérisé en ce que le moyen de séparation comprend au moins deux chambres distinctes (26,27) communiquant entre elles par un passage rétréci (29), dont une (26) pour recueillir la fraction lourde.

5/ Dispositif selon la revendication 4, caractérisé en ce que le moyen de séparation comprend trois chambres (26,27,63), communiquant entre elles, dont deux (26,63) pour recueillir successivement la fraction lourde, communiquant entre elles par un passage capillaire (86).

6/ Dispositif selon la revendication 1, caractérisé en ce que la cartouche comprend deux niveaux, l'un supérieur sur lequel s'effectue la circulation des liquides sous l'effet de la force centrifuge, et l'autre inférieur affecté au moins en partie à la cuve de trop-plein.

7/ Dispositif selon la revendication 1, caractérisé en ce que la chambre de calibrage (11) comporte deux conduits capillaires, l'un (80) d'introduction de la quantité dosée en provenance de la cartouche, l'autre (81) d'évacuation du trop-plein, en relation avec une chambre de trop-plein (14), et lesdits deux conduits capillaires sont inclinés par rapport au plan principal du boîtier.

8/ Dispositif selon la revendication 1, caractérisé en ce que le logement du réactif (9) est contenu dans le boîtier, et déplaçable par une poussée extérieure (18) audit boîtier, d'une position de conservation (fig.8) du réactif, dans laquelle le logement est fermé de manière étanche, à une position définitive d'activation (Fig.9), dans laquelle un orifice capillaire (50) est ouvert dans le logement, en direction de la chambre de mélange.

9/ Dispositif selon la revendication 1, caractérisé en ce que selon l'un (3) des axes de centrifugation, correspondant au sens d'écoulement de l'échantillon dans la cartouche de l'entrée (82) de cette dernière vers les moyens de dosage (26,27), la chambre de mélange (10) est située en aval du logement (7) pour le réactif.

## Patentansprüche

1. Vorrichtung zum Analysieren einer flüssigen Probe, mit einem unterteilten Gehäuse (1), das folgendes aufweist:

– einen Vorratsbehälter (9) für zumindest eine Dosis eines Reagenz und/oder eines Verdünnungsmittels;
– eine Meßkammer (11) für eine von der Probe erhalten abgemessene Menge;
– eine Mischkammer (10) für zumindest die abgemessene Menge und die Reagenzdosis;
– ggf. eine optische Meßzelle (19), die in Verbindung mit der Mischkammer (10) steht, wobei das Gehäuse dazu vorgesehen ist, mit einer Zentrifugiervorrichtung zusammenzuarbeiten, um die Flüssigkeiten im Inneren des Gehäuses unter der Einwirkung der Zentrifugalkraft zirkulieren zu lassen, dadurch gekennzeichnet, daß die Vorrichtung eine getrennte Kartusche (2) aufweist, die selbsthemmend am Gehäuse anbringbar (20, 21) ist, die einen Einlaß (82) zum Einführen der zu analysierenden Probe, einen Behälter (24) zum Aufnehmen der eingeführten Probe, Dosiermittel für die aufgenommene Probe, die über eine Kapillarleitung (25) mit dem Behälter in Verbindung stehen, sowie einen Auslaß (13) aufweist, um eine dosierte Menge auf einen Einlaß (12) des Gehäuses auszulassen, der mit der Meßkammer (11) kommuniziert.

2. Vorrichtung nach Anspruch 1, dadurch gekennzeichnet, daß der Auslaß (13) der Kartusche benachbart zu deren Einlaß (82), jedoch getrennt (84) von diesem, ist.

3. Vorrichtung nach Anspruch 1, dadurch gekennzeichnet, daß die Dosiermittel Mittel zum Trennen der zu analysierenden Probe durch Zentrifugieren in zumindest zwei Fraktionen beinhalten, nämlich in eine leichte und in eine schwere Fraktion, wobei die Mittel es ermöglichen, die schwerere Fraktion über den Auslaß (13) der Kartusche abzuführen, und ferner einen Überlaufbehälter beinhalten, der ebenfalls in Verbindung (41) mit den Dosiermitteln steht.

4. Vorrichtung nach Anspruch 3, dadurch gekennzeichnet, daß die Mittel zum Trennen zumindest zwei verschiedene Kammern (26, 27) enthalten, die über einen verengten Durchtritt (29) untereinander kommunizieren, wobei eine (26) dazu vorgesehen ist, die schwere Fraktion aufzunehmen.

5. Vorrichtung nach Anspruch 4, dadurch gekennzeichnet, daß die Mittel zum Trennen drei Kammern (26, 27, 63) aufweisen, die untereinander kommunizieren, von denen zwei (26, 63), zum nach und nach Aufnehmen der schweren Fraktion, durch einen Kapillardurchtritt (28) untereinander kommunizieren.

6. Vorrichtung nach Anspruch 1, dadurch gekennzeichnet, daß die Kartusche zwei Ebenen aufweist, eine obere, in der sich die Zirkulation der Flüssigkeiten unter der Wirkung der Zentrifugalkraft abspielt, und eine untere, die zumindest teilweise dem Oberlaufbehälter zugeordnet ist.

7. Vorrichtung nach Anspruch 1, dadurch gekennzeichnet, daß die Meßkammer (11) zwei Kapillarleitungen aufweist, eine (80) zum Einführen der von der Kartusche kommenden dosierten Menge, die andere (81) zum Entleeren des Überlaufes, die in Verbindung mit einer Überlaufkammer (14) steht, wobei diese beiden Kapillarleitungen im Hinblick auf die Hauptebene des Gehäuses geneigt sind.

8. Vorrichtung nach Anspruch 1, dadurch gekennzeichnet, daß der Vorratsbehälter (9) für das Reagenz im Gehäuse vorgesehen ist, und daß dieser durch einen von außen auf das Gehäuse gerichteten Stoß (18) von einer Konservierungsstellung (Fig. 8) des Reagenz, in der der Behälter dicht geschlossen ist, in eine Aktivierendstellung (Fig. 9) verschiebbar ist, in der eine Kapillaröffnung (50) im Behälter in Richtung auf die Mischkammer geöffnet ist.

9. Vorrichtung nach Anspruch 1, dadurch gekennzeichnet, daß längs einer der Achsen (3) der Zentrifugation, im Sinne des Ausströmens der in der Kartusche enthaltenen Probe von deren Einlaß (82) in Richtung der Dosiermittel (26, 27) die Mischkammer (10) stromabwärts des Vorratsbehälters (7) für das Reagenz angeordnet ist.

**Claims**

1. A device for analyzing a sample of a liquid, comprising a compartmented casing (1) comprising:
   – a container (9) for at least one dose of a reagent and/or diluent;
   – a chamber for calibration (11) of a calibrated quantity obtained from the sample;
   – a chamber for mixing (10) at least the calibrated quantity and the dose of reagent;
   – optionally a measuring optical cell (19) communicating with the mixing chamber (10);
   said casing (10) being intended to cooperate with a centrifuging apparatus, in order to circulate the liquids within the casing by means of centrifugal force, characterized by the fact that the device comprises an independent cartridge (2), to be irreversibely chipped (20, 21) to the casing, said cartridge comprising an inlet (82) for introducing the sample to be analyzed, a receptacle (24) for collecting the introduced sample, metering means of the collected sample, connected to the receptacle via a capillary duct (25), an outlet (13) for a metered quantity to an inlet (12) of the casing, communicating with the calibration chamber (11).

2. Device according to claim 1, wherein the outlet (13) of the cartridge is positioned in the vicinity of its inlet (82), but separared (84) from the latter.

3. Device according to claim 1, wherein the metering means incorporates means for separating the sample to be analyzed, by centrifuging, into at least two fractions, one light and one heavy, said separating means permitting the light fraction to be drained toward the outlet (13) of the cartridge, and an owerflow cell, also connected (41) to the metering means.

4. Device according to claim 3, wherein the separating means comprises at least two distinct chambers (26, 27) interconnected via a constricted passage (29), one of said chambers (26) serving to collect the heavy fraction.

5. Device according to claim 4, wherein the separating means comprises three chambers (26, 27, 63) interconnected via a capillary duct (86), two of them (26, 63) being designed to collect successively the heavy fraction.

6. Device according to claim 1, wherein the cartridge is bileveled, the upper level on which the liquids circulate under the action of the centrifugal force, and the lower level which is at least partly allocated to the overflow cell.

7. Device according to claim 1, wherein the calibration chamber (11) comprises two capillary ducts, one (80) for introducing the metered quantity originating from the cartridge, and the other (81) for draining the overflow, connected to an overflow chamber (14), the said capillary ducts being inclinated in relation with the main plane of the casing.

8. Device according to claim 1, wherein the container for the reagent (9) is contained within the casing, and can be displaced by pressure applied externally (18) to said casing, from a conservation position (figure 8) for the reagent, in which the container is closed in a waterlight manner, to a definitive activation position (figure 9), in which a capillary aperture (50) is opened in the container, toward the mixing chamber.

9. Device according to claim 1, wherein, according to one (3) of the centrifugation axis, corresponding to the flow of the sample into the cartridge, from the inlet (82) of the latter to the metering means (26, 27), the mixing chamber (10) is positioned downstream the container (7) for the reagent.

FIG.1

FIG.1a

FIG.5

FIG.2

FIG.6

FIG.3

FIG.4

FIG.7

FIG.8

FIG.9

FIG.10

FIG.11

FIG.12

EP 0 251 946 B1

FIG.13

FIG.14

FIG.15

FIG.16